# NOUVEAU FASCICULE DE BREVET EUROPEEN

(11) **EP 0 550 308 B2**
(45) Date de publication et mention de la décision concernant l'opposition: **31.07.2002**
(45) Mention de la délivrance du brevet: 17.06.1998
(21) Numéro de dépôt: 92403440.8
(22) Date de dépôt: 17.12.1992
(51) Int. Cl.: C08L 77/00, C08L 77/06

(54) **Compositions transparentes de polyamides à tenue aux agents chimiques élévée**
Transparente Polyamid-Mischungen mit hoher Beständigkeit gegenüber chemischen Mitteln
Transparent polyamide compositions with high resistance to chemical agents

(30) Priorité: 31.12.1991 FR 9116403
(43) Date de publication de la demande: 07.07.1993
(73) Titulaire: Atofina, 92800 Puteaux (FR)
(72) Inventeur: Maj, Philippe, W-5340 Bad Honnef (DE); Blondel, Philippe, F-27300 Bernay (FR)

(56) Documents cités:
- EP-A- 0 347 348
- EP-A- 0 409 666
- EP-B2- 0 070 001
- DE-A- 2 344 334
- DE-C2- 2 642 244
- PATENT ABSTRACTS OF JAPAN vol. 11, no. 394 (C-465)(2841) 23 Décembre 1987; & JP-A-62 156 130 ( MITSUI PETROCHEMICAL IND ) 11.07.1987

## Description

La présente invention a pour objet des compositions polyamides transparentes à tenue aux agents chimiques élevée, ainsi que leur procédé de préparation et les objets obtenus à partir de celles-ci.

Ces polyamides ainsi que leurs alliages sont largement utilisés pour de nombreuses applications. Certaines de ces applications nécessitent des propriétés spécifiques. Parmi ces propriétés recherchées, on peut citer la résistance aux chocs, à la traction et/ou à la compression, c'est-à-dire les propriétés mécaniques. D'autres propriétés recherchées sont la transparence et la tenue aux agents chimiques élevée afin de résister dans le temps aux agents atmosphériques. De nombreux objets nécessitent un aspect transparent, une tenue aux agents chimiques élevée ainsi que de bonnes propriétés mécaniques. On peut citer à titre d'exemple les flacons, bouchons, montures de lunettes et autres.

Il existe donc un besoin actuellement de disposer de ces matériaux transparents à tenue aux agents chimiques élevée.

De nombreux homo- et copolyamides, tant amorphes que cristallins, ont donc été proposés. De même, des mélanges ou alliages de ceux-ci ont été proposés. Ces alliages sont constitués d'un copolyamide amorphe transparent mélangé avec un (co)polyamide cristallin. Le but des ces alliages est d'obtenir une réduction du coût de production et/ou une augmentation de la tenue aux agents chimiques.

Ainsi, JP-60-215053 et 60-215054 (KOKAI) décrivent et revendiquent des alliages comprenant d'une part un polyamide transparent et d'autre part un polyamide cristallin. Le polyamide transparent est constitué de motifs aliphatiques en tant que composant monomère essentiel choisis parmi le lauryllactame, l'acide 12-aminododécanoïque ou 11-amino-undécanoïque, et des motifs cycliques. Les exemples donnés pour ces polyamides transparents font apparaître en tant que motifs cycliques une diamine cycloaliphatique, le bis-(4-aminocyclohexyl)-méthane et un diacide aromatique, l'acide isophtalique. Le polyamide cristallin est constitué de polyamide-12 et/ou -11, ou de copolyamide ayant comme monomère essentiel un motif 12 et/ou 11. Les conditions de mélange ne sont pas spécifiées, il est seulement indiqué que tout procédé connu est applicable. Les compositions résultantes sont transparentes.

FR-A-2 575 756 et FR-A-2 606 416 décrivent et revendiquent des mélanges ou alliages similaires à ceux mentionnés ci-avant. A nouveau, dans ce cas, l'acide isophtalique est le composant majoritaire du diacide aromatique et les conditions de mélange ne sont pas spécifiées. Les mélanges ou alliages obtenus sont transparents.

Le mélange des polyamides tel que mis en oeuvre dans les cas récités ci-avant remplit les conditions imposées par les produits à mélanger. Ainsi, US-P-4 404 317 décrit les conditions de mélange, telles que la température, pour divers polyamides; en particulier, il est recommandé de ne pas dépasser 300°C à cause de la dégradation du polyamide cristallin ainsi que du polyamide amorphe. En particulier, dans la notice "Technical Data Sheet" relative au polyamide transparent Grilamid® TR 55, qui est constitué de motif lauryllactame, acide isophtalique en tant que diacide aromatique et de bis-amine A en tant que diamine cycloaliphatique, il est spécifié que les températures de moulage-injection et d'extrusion sont de 280 à 305°C et de 270 à 285°C, respectivement. Aussi, il est connu que les polyamides cristallins (dont le PA12 ou PA6,12) présentent une température de dégradation de l'ordre de 270°C, tant pour le moulage-injection que pour l'extrusion, qui peut être portée pour des temps très courts ou en présence d'un stabilisant à une température d'environ 300°C. Ceci est décrit dans la notice technique "Engineering Thermoplastics" d'HULS, à la page 65.

EP-A-0 313 436 (au nom de la demanderesse) décrit des polyamides transparents dans lesquels, par contre, l'acide térephtalique est le composant majoritaire du diacide aromatique. Ces polyamides transparents amorphes présentent de remarquables propriétés tant mécaniques que de tenue aux agents chimiques. Le mélange de ces polyamides transparents amorphes avec un polyamide cristallin dans les conditions classiques mentionnées ci-avant conduit malheureusement à une composition qui n'est pas transparente.

Ainsi, les alliages recherchés de ces polyamides transparents à propriétés améliorées ne sont pas transparents lorsqu'ils sont effectués dans les conditions normales, et une température trop élevée conduirait à la dégradation des polymères.

De façon surprenante, il a été trouvé par la demanderesse que lesdits alliages recherchés sont obtenus grâce à la présente invention.

Ainsi, la présente invention a pour objet une composition polyamide transparente à tenue aux agents chimiques élevée comprenant, en poids:
a) 1 à 99%, de préférence 5 à 95%, d'un premier polyamide caractérisé par les enchaînements: 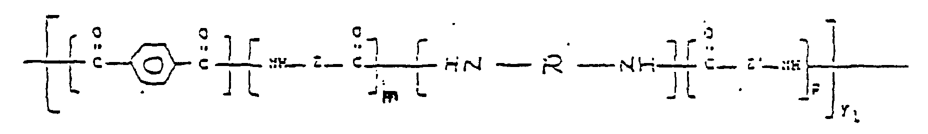 et 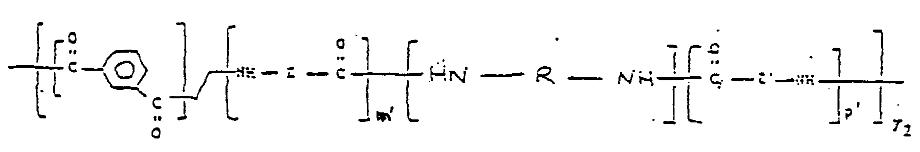 dans lesquels:
   - y₁ et y₂: sont des nombres tels que leur somme y₁ + y₂ est comprise entre 10 et 200 et
   y₁/y₁+y₂>0,5
   - m, p, m', p': sont des nombres supérieurs à 0;
   - Z et Z',: dans les motifs aliphatiques -NH-Z-CO- et -NH-Z'-CO-, identiques ou différents sont soit un segment polyméthylène (̵CH₂)̵ₙ où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
   - -HN-R-NH-: est une diamine cycloaliphatique
   le diacide aromatique pouvant être remplacé jusqu'à 30% en mole par un diacide carboxylique aliphatique contenant plus de 4, de préférence 6, atomes de carbone entre les fonctions acides; et
b) 99 à 1%, de préférence 95 à 5%, d'un polyamide semi-cristallin comprenant au moins 35%, de préférence 50%, en poids d'un motif aliphatique défini par la séquence -NH-(CH₂)_{n'}-CO- où n' est un nombre entier égal ou supérieur à 6 et de préférence compris entre 7 et 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides.

Les motifs aliphatiques -NH-Z-CO- et -NH-Z'-CO- sont obtenus, lors de la synthèse, à partir de lactame, d'aminoacide noacide correspondant, ou d'une condensation sensiblement stoechiométrique d'une ou plusieurs diamine(s) aliphatique(s) et d'un ou plusieurs diacide(s) carboxylique(s) aliphatique(s). Les lactames contiennent au moins 7 atomes de carbone, de préférence 8 à 12. Les lactames préférés sont le capryllactame, le décalactame, l'undécanolactame, le lauryllactame, ou lactame 12, ci-après désigné L12.
Particulièrement préféré est le L12 conduisant au motif 12. L'aminoacide correspondant est l'α,ω-aminoacide contenant autant d'atomes de carbone que le lactame correspondant. Les ω-aminoacides contiennent au moins 7 atomes de carbone, de préférence 8 à 12. Les α,ω-aminoacides préférés sont l'acide 10-aminodécanoïque, l'acide 11-aminoundécanoïque, l'acide 12-aminododécanoïque.
Le diacide carboxylique aliphatique est un α,ω-diacide carboxylique possédant au moins 4 atomes de carbone (non compris les atomes de carbone du groupe carboxylique), de préférence au moins 6, dans la chaîne carbonée linéaire ou ramifiée. Les diacides carboxyliques préférés sont l'acide adipique, l'acide azélaïque, l'acide sébacique et l'acide 1,12-dodécanoïque.

Le terme "diamine aliphatique" tel qu'utilisé dans la présente invention désigne une α,ω-diamine contenant entre les groupes amino terminaux au moins 4 atomes de carbone, de préférence 6 à 12. La chaîne carbonée est linéaire (polyméthylènediamine) ou ramifiée. Des mélanges de diamines aliphatiques sont aussi envisagés dans la présente invention. Des diamines aliphatiques préférées sont l'hexaméthylénediamine (HMDA), la 2,2,4- et/ou 2,4,4-triméthylhexaméthylènediamine, la dodécaméthylènediamine, la triméthylhexaméthylènediamine, la méthylpentaméthylènediamine, la 5-méthylnonaméthylénediamine et la décaméthylènediamine.

Le terme "diamine cycloaliphatique" tel qu'utilisé dans la présente invention désigne une amine de formule 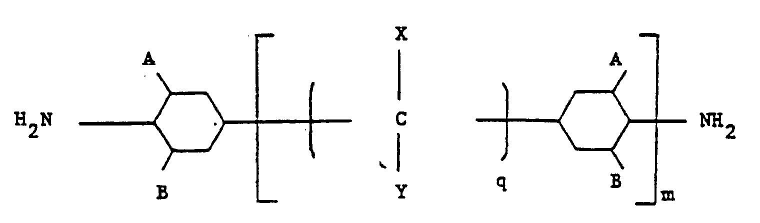 dans laquelle:
- A et B,: identiques ou différentes, représentent l'hydrogène, le radical méthyle, le radical éthyle ou le radical isopropyle;
- X et Y,: identiques ou différents, représentent l'hydrogène ou le radical méthyle;
- q: est un nombre entier compris entre 0 et 6;
- m: vaut 0 ou 1.
Des mélanges de diamines cycloaliphatiques sont aussi envisagés dans la présente invention.

Ce terme "diamine cycloaliphatique" couvre aussi, au sens de la présente invention, les diamines comportant une structure cycloaliphatique telle que définie par la formule ci-dessus dans leur chaîne carbonée. On peut citer à titre d'exemple l'isophoronediamine et le 3,6-diaminométhyltricyclodécane.
On peut citer à titre d'exemple de diamine cycloaliphatique les diamines suivantes: l'isophoronediamine, le bis(4-aminocyclohexyl)méthane (BACM), le bis(3-méthyl-4-aminocyclohexyl)méthane (BMACM), le bis(3-méthyl-4-amino-5-éthylcyclohexyl)méthane, le 1,2-bis(4-aminocyclohexyl)éthane, le 2,2'-bis(4-aminocyclohexyl)propane et le 2,2'-bis (3-méthyl-4-aminocyclohexyl)propane
Le terme "sensiblement stoechiométrique" signifie un rapport en mole diamine/diacide compris entre 1,1/1 et 1/1,1. Ainsi, le terme "condensation sensiblement stoechiométrique d'une ou plusieurs diamine(s) et d'un ou plusieurs diacide (s)" peut représenter le motif 6,6 ou 6,12 par exemple.
Le terme "éventuellement en tant que partie d'un motif aromatique" tel qu'utilisé dans la présente invention signifie que la partie aliphatique de ce motif semi-aromatique est comptabilisée; à titre d'exemple, pour un polyamide 12-12,T de composition massique 50/50, le motif aliphatique représente 75% en poids de ce polyamide.
Le terme "polyamide transparent" tel qu'utilisé dans la présente invention désiqne un polyamide dont le facteur de transmission, lorsque le polyamide est sous la forme d'une plaque mince de 2 mm d'épaisseur, est d'au moins 70%. Selon un mode de réalisation de la présente invention, la composition comprend, en poids:
a) 40 à 90% dudit premier polyamide; et
b) 60 à 10% dudit polyamide semi-cristallin.
Avantageusement, ladite composition comprend en poids:
a) 50 à 80% dudit premier polyamide; et
b) 50 à 20% dudit polyamide semi-cristallin.

Selon un mode de réalisation de la présente invention, ledit polyamide semi-cristallin comprend au moins 80% en poids d'un motif aliphatique défini par la séquence -NH-(CH₂)ₙ;-CO- où n' vaut 7, 10 ou 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 6 atomes de carbone entre les fonctions amines et d'un ou plusieurs diacide(s) carboxylique(s) aliphatique (s) contenant au moins 7 atomes de carbone entre les fonctions. acides.
Avantageusement, ledit polyamide semi-cristallin est choisi dans le groupe consistant en: PA 12, PA 11, les copolymères correspondants dans lesquels lesdits motifs 12 ou 11 représentent plus de 80% en poids, et leurs mélanges.

Selon un mode préféré de réalisation de la présente invention, ledit polyamide semi-cristallin est du PA 12 et/ou PA 11. Le poids moléculaire du polyamide semi-cristallin est compris entre environ 10 000 et 30 000, de préférence 15 000 et 25 000.

Selon un mode de réalisation de la présente invention, dans ledit premier polyamide, les motifs aliphatiques sont des motifs 12 et/ou 11.
Avantageusement, la diamine cycloaliphatique a pour formule: 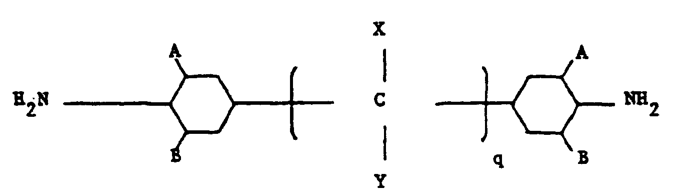 dans laquelle:
- A et B,: identiques ou différents, représentent l'atome d'hydrogène ou le radical méthyle;
- X et Y,: identiques ou différents, représentent l'atome d'hydrogène ou le radical méthyle;
- q: est un nombre entier compris entre 1 et 3;
éventuellement remplacée jusqu'à 50% en mole par l'isophoronediamine.
De préférence, la diamine cycloaliphatique est le bis-(3-méthyl-4-aminocyclohexyl)méthane, éventuellement remplacée jusqu'à 50% en mole par l'isophoronediamine.

Le premier polyamide préféré est L12/TA/IA/BMACM selon des proportions molaires: 2-0,5/0,7-0,5/0,3-0,5/0,91 -1,05. Le poids moléculaire du premier polyamide est compris entre environ 8 000 et 25 000, de préférence 10 000 et 20 000.

La composition selon la présente invention peut contenir des charges classiques, des additifs classiques, des catalyseurs d'amidification ou de trans-amidification ainsi que d'autres polymères tel qu'un autre polyamide amorphe ou semi-cristallin. Les charges classiques sont, par exemple, les charges minérales telles que: talc, magnésie, scorie, kaolin, etc, notamment fibres de verre. Les additifs classiques sont, par exemple, les stabilisants à la lumière et/ou à la chaleur, colorants, azurants optiques, plastifiants, agents de démoulage, agents d'ignifugation et autres.

La présente invention a aussi pour objet les objets obtenus à partir de la présente composition. Les objets peuvent être fabriqués par tout procédé connu, tel que par exemple le moulage-injection.

Les présentes compositions sont préparées grâce à un nouveau procédé, autre objet de l'invention. La présente invention concerne donc aussi un procédé de préparation d'une composition polyamide transparente à tenue aux agents chimiques élevée comprenant, en poids:
a) 1 à 99%, de préférence 5 à 95%, d'un premier polyamide caractérisé par les enchaînements: 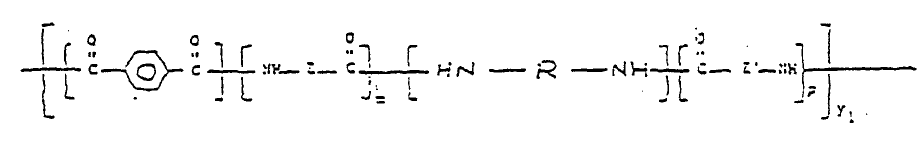 et 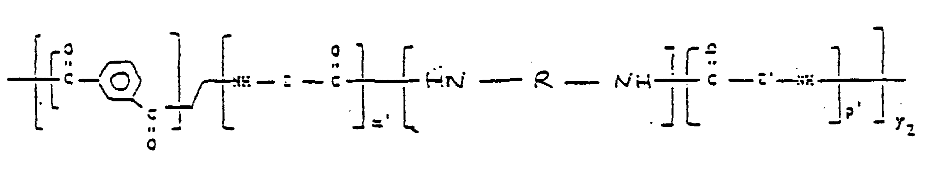 dans lesquels:
   - y₁ et y₂: sont des nombres tels que leur somme y₁ + y₂ est comprise entre 10 et 200 et
   y₁/y₁+y₂>0,5
   - m, p, m', p': sont des nombres supérieurs à 0;
   - Z et Z',: dans les motifs aliphatiques -NH-Z-CO- et -NH-Z'-CO-, identiques ou différents sont soit un segment polyméthylène (̵CH₂)̵ₙ où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
   - -HN-R-NH-: est une diamine cycloaliphatique
   le diacide aromatique pouvant être remplacé jusqu'à 30% en mole par un diacide carboxylique aliphatique contenant plus de 4, de préférence 6, atomes de carbone entre les fonctions acides; et
b) 99 à 1%, de préférence 95 à 5%, d'un polyamide semi-cristallin comprenant au moins 35%, de préférence 50%, en poids d'un motif aliphatique défini par la séquence -NH-(CH₂)_{n'}-CO- où n' est un nombre entier égal ou supérieur à 6 et de préférence compris entre 7 et 11, éventuellement en tant que partie d'unmotif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides.
caractérisé en ce qu'il comprend une étape de mélange desdits premier polyamide et polyamide semi-cristallin à une température supérieure à 300°C, de préférence entre 300 et 400°C.

La température de l'étape de mélange est élevée, supérieure à la température de décomposition de polyamides, mais de façon tout à fait surprenante, cette décomposition n'a pas lieu et des compositions polyamides transparentes à tenue aux agents chimiques élevée sont obtenues.

Selon un mode de mise en oeuvre du présent procédé, la température de ladite étape de mélange est comprise entre 300°C et 370°C. Le temps de séjour à cette température est compris entre 1 seconde et 20 minutes, de préférence 10 secondes et 5 minutes.

Alternativement, un autre procédé consiste en le mélange dudit premier polymère précité, éventuellement à l'état de prépolymère dont le degré de polymérisation est d'au moins 50%, avec ledit polymère semi-cristallin précité à une température comprise entre 250 et 350°C, en présence d'un catalyseur d'amidification ou de trans-amidification, avec un temps de séjour de 1 à 60 minutes. Cette étape de mélange peut être mise en oeuvre en présence des additifs et/ou charge. Ce procédé s'applique aussi aux polymères dont la teneur en acide isophtalique est supérieure à celle en acide téréphtalique.

Ainsi, la présente invention a aussi pour objet un procédé de préparation d'une composition polyamide transparente à tenue aux agents chimiques élevée comprenant, en poids:
a) 1 à 99%, de préférence 5 à 95%, d'un premier polyamide caractérisé par les enchaînements: 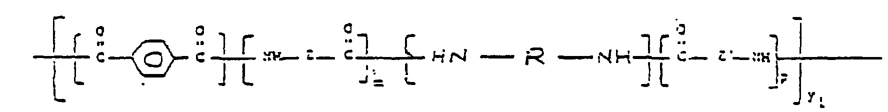 et 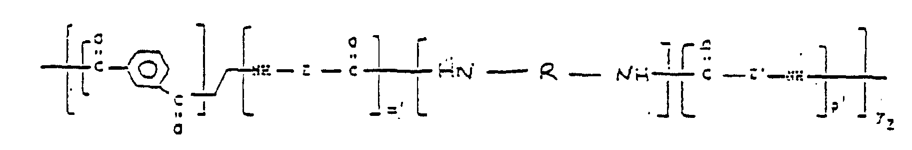 dans lesquels:
   - y₁ et y₂: sont des nombres tels que leur somme y₁ + y₂ est comprise entre 10 et 200;
   - m, p, m', p': sont des nombres supérieurs à 0;
   - Z et Z',: dans les motifs aliphatiques -NH-Z-CO- et -NH-Z'-CO-, identiques ou différents sont soit un segment polyméthylène (̵CH₂)̵ₙ où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
   - -HN-R-NH-: est une diamine cycloaliphatique
   le diacide aromatique pouvant être remplacé jusqu'à 30% en mole par un diacide carboxylique aliphatique contenant plus de 4, de préférence 6, atomes de carbone entre les fonctions acides; et
b) 99 à 1%, de préférence 95 à 5%, d'un polyamide semi-cristallin comprenant au moins 35%, de préférence 50%, en poids d'un motif aliphatique défini par la séquence -NH-(CH₂)_{n'}-CO- où n' est un nombre entier égal ou supérieur à 6 et de préférence compris entre 7 et 11, éventuellement en tant que partie d'un motif semi-aromatique, et/ou d'un motif aliphatique défini-par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
caractérisé en ce qu'il comprend une étape de mélange dudit premier polyamide, éventuellement à l'état de prépolymère dont le degré de polymérisation est d'au moins 50% et dudit polymère semi-cristallin à une température comprise entre 250 et 350°C en présence d'un catalyseur d'amidification ou de transamidification.
De préférence, les conditions opératoires sont les suivantes. Le catalyseur est l'acide phosphorique ou hypophosphoreux; la température de mélange est de 280 à 340°C; le temps de séjour est de 5 à 33 minutes; le degré de polymérisation dudit prépolymère est d'au moins 90%.

De préférence, l'étape de mélange est mise en oeuvre dans une extrudeuse. Ainsi, les polyamides premier et semi-cristallin sont broyés en granulés ou en poudre, puis chargés dans une extrudeuse dans laquelle ils sont portés progressivement à une température supérieure à la température de fusion. L'extrudeuse peut être n'importe quelle extrudeuse classique, mono ou bi-vis, avec un rapport L/D de préférence compris entre 10 et 60, à profil de préférence malaxeur.

La présente invention est illustrée plus en détail à l'aide des exemples suivants donnés à titre illustratif mais non limitatif. Dans ces exemples, la tenue aux agents chimiques est déterminée par la mesure de l'absorption d'éthanol.

Les méthodes d'analyse sont les suivantes:

La température de transition vitreuse Tg est mesurée à l'aide d'un appareil Perkin-Elmer DSC-4 sur la deuxième chauffe à 20°C/min après refroidissement intermédiaire à 40°C min. La valeur est prise au point milieu de la transition.

L'absorption d'éthanol est mesurée sur des éprouvettes type IFC Institut Français du Caoutchouc d'épaisseur 2 mm et de poids environ 1g, préalablement séchées, après 8 jours d'immersion dans l'éthanol pur à 25°C. La valeur est donnée en pourcentage d'augmentation du poids initial (EtOH 8 j, %).

Les viscosités inhérentes sont mesurées à 25°C avec des solutions à 0,5 g/dl dans le m-crésol.

### EXEMPLES 1 A 5

Les exemples ont été réalisés sur une extrudeuse bi-vis Werner 30 équipée d'un profil malaxeur, à partir de polyamide semi-cristallin PA-12 de viscosité inhérente 1,52 dl/g et du premier polyamide (A). Celui-ci est synthétisé par polycondensation à l'état fondu à partir de bis-(3-méthyl-4-aminocyclohexyl)méthane (BMACM), de lauryllactame (L12) et d'acides iso- et térephtalique (IA et TA) dans un rapport molaire de 1/1/0,3/0,7, et présente une Tg de 170°C et une viscosité inhérente de 1,05 dl/g.

Les conditions sont données dans le tableau 1 avec l'aspect du produit obtenu et sa température de transition vitreuse.

Les produits obtenus par compoundage à 310 ou 320°C sont tous transparents.

### EXEMPLES COMPARATIFS 6 A 10

Ces exemples ont été réalisés avec le même appareil et les mêmes produits que les essais 1 à 5, mais avec des températures de malaxage moins élevées, et ils ne sont pas transparents. Les résultats sont donnés dans le tableau 1.

**TABLEAU 1**

| Exemple | Fractions massiques PA premier (A) | PA12(B) | Température matière,°C | Temps de séjour mn | Observations |
|---|---|---|---|---|---|
| 1 | 80 | 20 | 310 | 2,2 | transparent |
| 2 | 75 | 25 | 320 | 2,2 | transparent |
| 3 | 75 | 25 | 320 | 1,3 | transparent |
| 4 | 70 | 30 | 320 | 2,2 | transparent |
| 5 | 70 | 30 | 320 | 1,3 | transparent |
| 6 | 80 | 20 | 280 | 1,3 | légèrement opaque |
| 7 | 80 | 20 | 280 | 2,2 | légèrement opaque |
| 8 | 80 | 20 | 300 | 1,3 | légèrement opaque |
| 9 | 75 | 25 | 300 | 1,3 | opaque |
| 10 | 75 | 25 | 300 | 2,2 | légèrement opaque |

### EXEMPLES 12 A 16

Ces exemples ont été réalisés par compoundage à 310 ou 320°C sur extrudeuse bi-vis de Laboratoire Haacke équipée d'un profil malaxeur, à partir d'un mélange de granulés de polyamide premier de Tg 170°C similaire à celui de l'exemple 1 et de PA12 similaire à celui de l'exemple 1.

Les mélanges obtenus contenant de 20 à 50% de PA12 sont tous transparents, et présentent une seule Tg comprise entre 131 et 73°C. Ces résultats et les conditions opératoires sont donnés tableau 2.

### EXEMPLES COMPARATIFS 17 A 20

De manière comparable aux exemples 12 à 16, ces essais sont réalisés par compoundage à une température comprise entre 260 et 295°C avec des taux de PA12 de 20 et 30%. Tous ces essais sont opaques et présentent un point de fusion vers 175°C. Les résultats sont donnés au tableau 2.

**TABLEAU 2**

| Exemple | Fractions massiques | | Température matière, °C | Vitesse de rotation tr/mn | | EtOH | Observations |
|---|---|---|---|---|---|---|---|
| | PA premier (A) | PA12 (B) | | | Tg, °C | 8j, % | |
| 11 | 80 | 20 | 310 | 80 | 131 | | transparent |
| 12 | 75 | 25 | 320 | 40 | 124 | 27 | transparent |
| 13 | 65 | 35 | 320 | 60 | 102 | 24,7 | transparent |
| 14 | 60 | 40 | 320 | 80 | 90 | 23,8 | transparent |
| 15 | 55 | 45 | 320 | 80 | 88 | 22,6 | transparent |
| 16 | 50 | 50 | 320 | 20 | 73 | 21,6 | transparent |
| 17 | 80 | 20 | 295 | 75 | 132(Tf175) | | légèrement opaque |
| 18 | 80 | 20 | 295 | 35 | 121(Tf176) | | légèrement opaque |
| 19 | 80 | 20 | 280 | 60 | 145(Tf174) | | opaque |
| 20 | 70 | 30 | 260 | 60 | 133(Tf177) | | opaque |

### EXEMPLES 21 A 30

Ces exemples ont été réalisés par compoundage sur extrudeuse bi-vis de laboratoire Haacke de mélange de granulés de polyamide premier et de PA11 ou PA12. Tous les produits obtenus sont transparents et présentent des absorptions d'éthanol mesurées après 8 jours d'immersion à 25°C relativement peu importantes. Les résultats sont portés dans le tableau 3. Les abréviations sont celles utilisées dans l'exemple 1, avec de plus AA pour acide adipique et M11 pour l'acide 11-aminoundécanoïque.

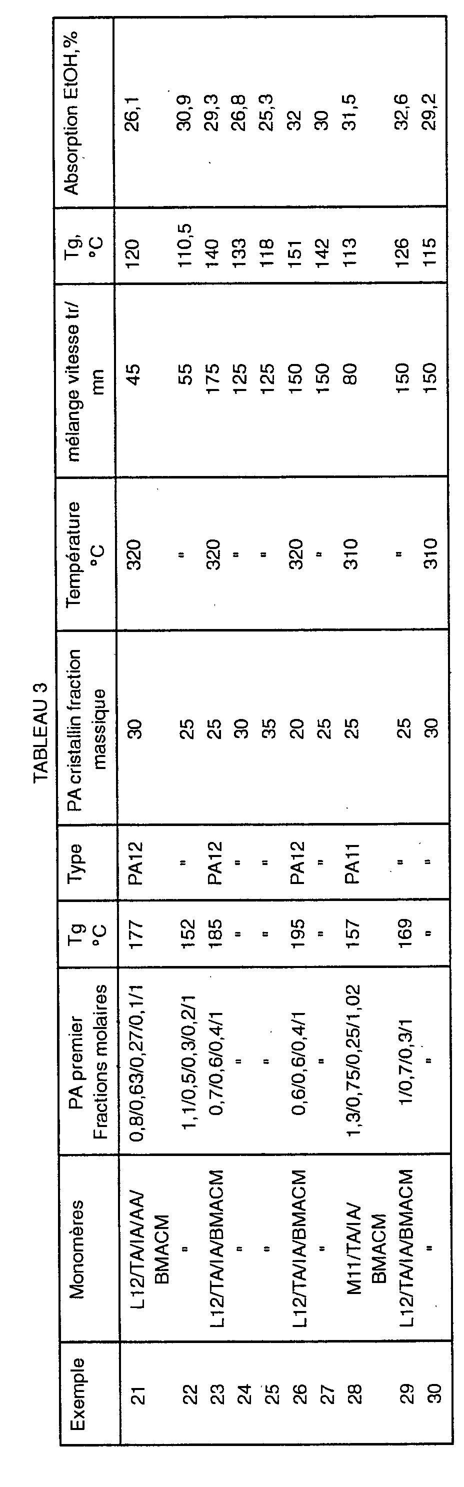

## Revendications

1. Composition polyamide transparente à tenue aux agents chimiques élevée comprenant, en poids :
a) de 1 à 99 %, de préférence 5 à 95 %, d'un premier polyamide **caractérisé par** les enchaînements : 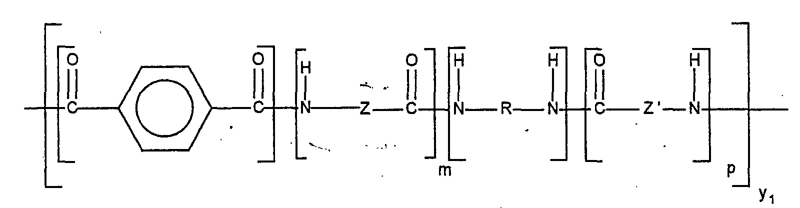 et 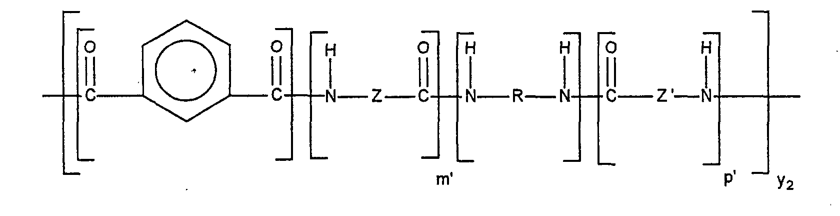 dans lesquels :
y₁ et y₂ sont des nombres tels que leur somme y₁ + y₂ est comprise entre 10 et 200 et que y₁/(y₁ + y₂) > 0,5 ;
m, p, m', p' sont des nombres supérieurs à 0 ;
Z et Z' dans les motifs aliphatiques -NH-Z-CO- et -NH-Z'-CO-, identiques ou différents sont soit un segment polyméthylène (̵CH₂)̵ₙ
où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique (s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides ;
-HN-R-NH- est une diamine cycloaliphatique
le diacide aromatique pouvant être remplacé jusqu'à 30 % en mole par un diacide carboxylique aliphatique contenant plus de 4, de préférence 6, atomes de carbone entre les fonctions acides ; et
b) 99 à 1 %, de préférence 95 à 5 %, d'un polyamide semi-cristallin comprenant au moins 35 %, de préférence 50 %, en poids d'un motif aliphatique défini par la séquence -NH-(CH₂)_{n'}-CO- où n' est un nombre entier égal ou supérieur à 6 et de préférence compris entre 7 et 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides, susceptible d'être obtenue selon un procédé comprenant une étape de mélange desdits premier polyamide et polyamide semi-cristallin à une température supérieure à 300°C, de préférence entre 300° et 400°C.

2. Composition selon la revendication 1, **caractérisée en ce que** ladite composition comprend en poids :
a) 40 à 90 % dudit premier polyamide; et
b) 60 à 10 % dudit polyamide semi-cristallin.

3. Composition selon la revendication 1, **caractérisée en ce que** ladite composition comprend en poids:
a) 50 à 80 % dudit premier polyamide; et
b) 50 à 20% dudit polyamide semi-cristallin.

4. Composition selon l'une quelconque des revendications 1 à 3, **caractérisée en ce que** ledit polyamide semi-cristallin comprend au moins 80 % en poids d'un motif aliphatique défini par la séquence -NH-(CH₂)_{n'}-CO- où n' vaut 7, 10 ou 11, et/ou d'un motif aliphatique défini par la séquence contenant une fonction amide résultant de la condensation sensiblement stoechiométrique d'une ou plusieurs diamine(s) aliphatique(s) contenant au moins 6 atomes de carbone entre les fonctions amines et d'un ou plusieurs diacide(s) carboxylique(s) aliphatique(s) contenant au moins 7 atomes de carbone entre les fonctions acides.

5. Composition selon l'une quelconque des revendications 1 à 4, **caractérisée en ce que** ledit polyamide semi-cristallin est choisi dans le groupe consistant en : PA 12, PA 11, les copolymères correspondants dans lesquels lesdits motifs 12 ou 11 représentent plus de 80 % en poids, et leurs mélanges.

6. Composition selon l'une quelconque des revendications 1 à 5, **caractérisée en ce que** ledit polyamide cristallin est du PA 12 et/ou du PA 11.

7. Composition selon l'une quelconque des revendications 1 à 6, **caractérisée en ce que** ledit polyamide semi-cristallin a un poids moléculaire compris entre environ 10 000 et 30 000, de préférence 15 000 à 25 000.

8. Composition selon l'une quelconque des revendications 1 à 7, **caractérisée en ce que**, dans ledit premier polyamide, les motifs aliphatiques sont présents en une proportion d'au moins 10 % en poids.

9. Composition selon l'une quelconque des revendications 1 à 8, **caractérisée en ce que**, dans ledit premier polyamide, les motifs aliphatiques sont des motifs 12 et/ou 11.

10. Composition selon l'une quelconque des revendications 1-9, **caractérisée en ce que** ladite diamine cycloaliphatique a pour formule : 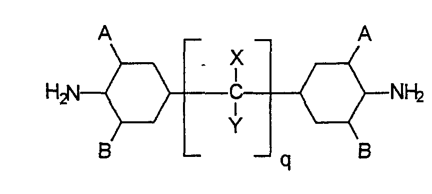 dans laquelle :
A et B, identiques ou différents, représentent l'atome d'hydrogène ou le radical méthyle;
X et Y, identiques ou différents, représentent l'atome d'hydrogène ou le radical méthyle;
q est un nombre entier compris entre 1 et 3;
éventuellement remplacée jusqu'à 50 % en mole par l'isophoronediamine.

11. Composition selon la revendication 10, **caractérisée en ce que** la diamine cycloaliphatique est le bis-(3-méthyl-4-aminocyclohexyl)méthane, éventuellement remplacée jusqu'à 50 % en mole par l'isophoronediamine.

12. Composition selon l'une quelconque des revendications 1 à 11, **caractérisée en ce que** ledit premier polyamide correspond à L12/TA/IA/BMACM selon des proportions molaires : 2-0,5/0,7-0,5/0,3-0,5/0,95-1,05.

13. Composition selon l'une quelconque des revendications 1 à 12, **caractérisée en ce que** ledit premier polyamide a un poids moléculaire compris entre environ 8 000 et 25 000, de préférence 10 000 à 20 000.

14. Composition selon l'une quelconque des revendications 1 à 13, **caractérisée en ce qu'**elle comprend de plus une charge et/ou un additif.

15. Objets obtenus à partir d'une composition selon l'une quelconque des revendications 1 à 14.

16. Procédé de préparation d'une composition polyamide transparente à tenue aux agents chimiques élevée comprenant, en poids :
a) 1 à 99 %, de préférence 5 à 95 %, d'un premier polyamide **caractérisé par** les enchaînements : 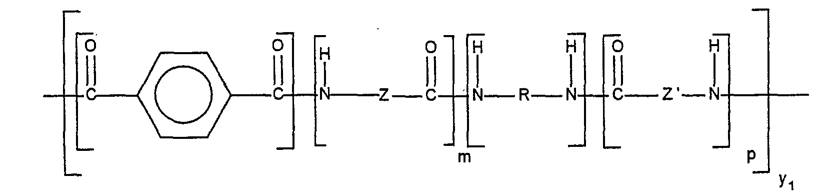 et 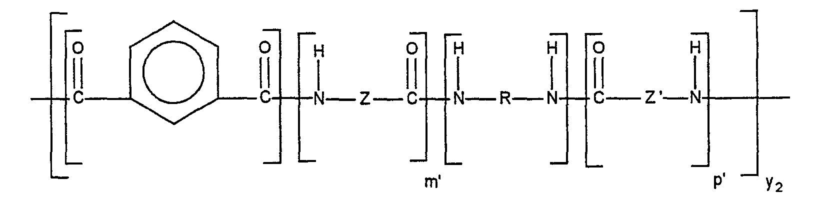 dans lesquels :
y₁ et y₂ sont des nombres tels que leur somme y₁ + y₂ est comprise entre 10 et 200 et que y₁/( y₁ + y₂) > 0,5 ;
m, p, m', p' sont des nombres supérieurs à 0 ;
Z et Z' dans les motifs aliphatiques -NH-Z-CO- et -NH-Z'-CO-, identiques ou différents sont soit un segment polyméthylène (̵CH₂)̵ₙ
où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique (s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides ;
-HN-R-NH- est une diamine cycloaliphatique
le diacide aromatique pouvant être remplacé jusqu'à 30 % en mole par un diacide carboxylique aliphatique contenant plus de 4, de préférence 6, atomes de carbone entre les fonctions acides ; et
b) 99 à 1 %, de préférence 95 à 5 %, d'un polyamide semi-cristallin comprenant au moins 35 %, de préférence 50 %, en poids d'un motif aliphatique défini par la séquence -NH-(CH₂)_{n'}-CO- où n' est un nombre entier égal ou supérieur à 6 et de préférence compris entre 7 et 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
**caractérisé en ce qu'**il comprend une étape de mélange desdits premier polyamide et polyamide semi-cristallin à une température supérieure à 300°C, de préférence entre 300°C et 400°C.

17. Procédé selon la revendication 16, **caractérisé en ce que** la température de ladite étape de mélange est comprise entre 300 et 370°C.

18. Procédé selon la revendication 16 ou 17, **caractérisé en ce que** le temps de séjour est compris entre 1 seconde et 20 minutes, de préférence 10 secondes à 5 minutes.

19. Procédé de préparation d'une composition polyamide transparente à tenue aux agents chimiques élevée comprenant, en poids :
a) 1 à 99 %, de préférence 5 à 95 %, d'un premier polyamide **caractérisé par** les enchaînements : 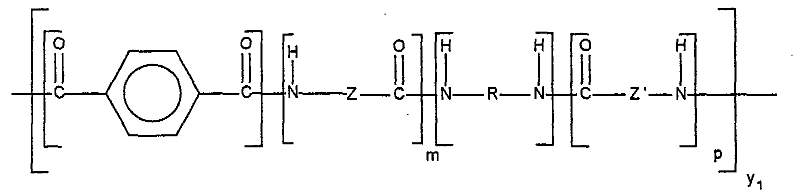 et 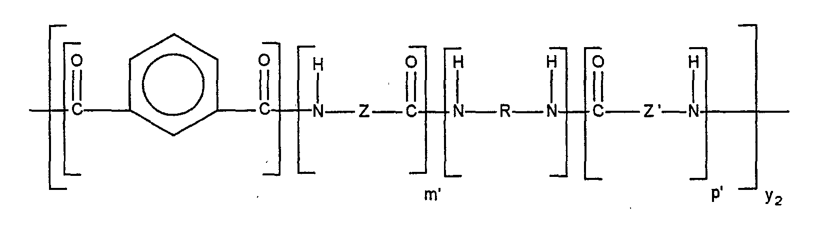 dans lesquels :
y₁ et y₂ sont des nombres tels que leur somme y₁ + y₂ est comprise entre 10 et 200;
m, p, m', p' sont des nombres supérieurs à 0 ;
Z et Z' dans les motifs aliphatiques -NH-Z-CO- et -NH-Z'-CO-, identiques ou différents sont soit un segment polyméthylène
(̵CH₂)̵ₙ
où n est un nombre entier égal ou supérieur à 6 et de préférence compris entre 7 et 11, soit une séquence contenant une fonction amide résultant de la condensation sensiblement stoechiométrique d'une ou plusieurs diamine(s) aliphatique (s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
-HN-R-NH- est une diamine cycloaliphatique
le diacide aromatique pouvant être remplacé jusqu'à 30 % en mole par un diacide carboxylique aliphatique contenant plus de 4, de préférence 6, atomes de carbone entre les fonctions acides ; et
b) 99 à 1 %, de préférence 95 à 5 %, d'un polyamide semi-cristallin comprenant au moins 35 %, de préférence 50 %, en poids d'un motif aliphatique défini par la séquence -NH-(CH₂)_{n'}-CO- où n' est un nombre entier égal ou supérieur à 6 et de préférence compris entre 7 et 11, éventuellement en tant que partie d'un motif semi-aromatique, et/ou d'un motif aliphatique défini par la séquence contenant une fonction amide résultant de la condensation sensiblement stoechiométrique d'une ou plusieurs diamine(s) aliphatique(s) contenant au moins 4 atomes de carbone entre les fonctions amines et d'un ou plusieurs diacide(s) carboxylique(s) aliphatique(s) contenant au moins 4, et de préférence au moins 6, atomes de carbone entre les fonctions acides;
**caractérisé en ce qu'**il comprend une étape de mélange dudit premier polyamide, éventuellement à l'état de prépolymère dont le degré de polymérisation est d'au moins 50 % et dudit polymère semi-cristallin à une température comprise entre 250 et 350°C en présence d'un catalyseur d'amidification ou de transamidification.

20. Procédé selon la revendication 19, **caractérisé en ce que** ledit catalyseur est l'acide phosphorique ou hypophosphoreux.

21. Procédé selon la revendication 19 ou 20, **caractérisé en ce que** la température est de 280 à 340°C.

22. Procédé selon l'une quelconque des revendications 19 à 21, **caractérisé en ce que** le temps de séjour est de 1 à 60 minutés, de préférence 5 à 30 minutes.

23. Procédé selon l'une quelconque des revendications 19 à 22, **caractérisé en ce que** le degré de polymérisation dudit prépolymère du premier polymère est d'au moins 90 %.

24. Procédé selon l'une quelconque des revendications 16 à 23, **caractérisé en ce que** l'étape de mélange est mise en oeuvre dans une extrudeuse.

## Patentansprüche

1. Transparente, Polyamidzusammensetzung mit hoher Beständigkeit gegenüber chemischen Reagenzien, enthaltend, bezogen auf das Gewicht:
a) 1 bis 99 %, vorzugsweise 5 bis 95 %, eines ersten Polyamids, **gekennzeichnet durch** die folgenden Ketten: 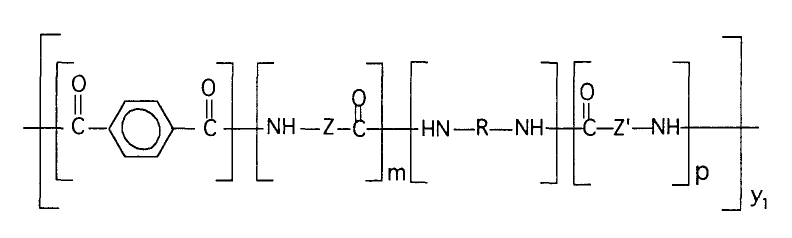 und 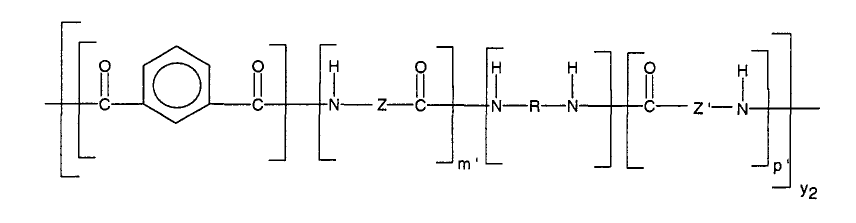 wobei:
• y₁ und y₂ Zahlen sind, deren Summe y₁ + y₂ zwischen 10 und 200 liegt und y₁/(y₁+y₂) > 0,5;
• m, p, m', p' Zahlen größer 0 sind;
• Z und Z' in den aliphatischen Einheiten -NH-Z-CO- und - NH-Z'-CO-, identisch oder verschieden, entweder ein Polymethylensegment (-CH₂-)ₙ sind, wobei n eine ganze Zahl größer oder gleich 6, vorzugsweise zwischen 7 und 11, ist, oder einen Block darstellen, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, und einem oder mehreren aliphatischen Carbonsäuren, die mindestens 4 Kohlenstoffatome, vorzugsweise 6 Kohlenstoffatome, zwischen den Säurefunktionen enthalten, resultiert;
• -HN-R-NH- ein cycloaliphatisches Amin darstellt;
wobei die aromatische Disäure in Mengen von höchstens 30 Mol-% **durch** eine aliphatische Dicarbonsäure ersetzt werden kann, die mehr als 4 Kohlenstoffatome, vorzugsweise mehr als 6 Kohlenstoffatome, zwischen den Säurefunktionen enthält; und
b) 99 bis 1 %, vorzugsweise 95 bis 5 %, eines semikristallinen Polyamids, das mindestens 35 Gew.-%, vorzugsweise 50 Gew.-%, einer aliphatischen Einheit enthält, die **durch** den Block -NH-(CH₂)_{n'}-COdefiniert ist, wobei n' eine ganze Zahl größer oder gleich 6, vorzugsweise zwischen 7 und 11, ist, gegebenenfalls als Teil einer semiaromatischen Einheit, und/oder einer aliphatischen Einheit, die **durch** den Block definiert ist, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, und einer oder mehrerer aliphatischer Dicarbonsäuren stammt, die mindestens 4 Kohlenstoffatome, vorzugsweise 6 Kohlenstoffatome, zwischen den Säurefunktionen enthalten, erhältlich nach einem Verfahren, welches einen Verfahrensschritt umfaßt, bei dem das erste Polyamid und das semikristalline Polyamid bei einer Temperatur oberhalb von 300 °C, vorzugsweise zwischen 300 °C und 400 °C, gemischt werden.

2. Zusammensetzung nach Anspruch 1, **dadurch gekennzeichnet, daß** die Zusammensetzung, bezogen auf das Gewicht, umfaßt:
a) 40 bis 90 % des ersten Polyamids; und
b) 60 bis 10 % des semikristallinen Polyamids.

3. Zusammensetzung nach Anspruch 1, **dadurch gekennzeichnet, daß** die Zusammensetzung, bezogen auf das Gewicht, enthält:
a) 50 bis 80 % des ersten Polyamids; und
b) 50 bis 20 % des semikristallinen Polyamids.

4. Zusammensetzung nach einem der Ansprüche 1 bis 3, **dadurch gekennzeichnet, daß** das semikristalline Polyamid mindestens 80 Gew.-% einer aliphatischen Einheit umfaßt, welche durch den Block -NH-(CH₂)_{n'}-COdefiniert ist, wobei n' 7, 10 oder 11 ist, und/oder eine aliphatischen Einheit umfaßt, die durch den Block definiert ist, der eine Amidfunktion enthält, die aus der in etwa stöchiometrischen Kondensation eines oder mehrerer aliphatischer Diamine, die mindestens 6 Kohlenstoffatome zwischen den Aminfunktionen enthalten, mit einer oder mehreren aliphatischen Dicarbonsäuren stammt, die mindestens 7 Kohlenstoffatome zwischen den Säurefunktionen enthalten.

5. Zusammensetzung nach einem der Ansprüche 1 bis 4, **dadurch gekennzeichnet, daß** das semikristalline Polyamid ausgewählt ist aus der Gruppe von PA 12, PA 11, den entsprechenden Copolymeren, bei denen die Einheiten 12 oder 11 mehr als 80 Gew.-% entsprechen, sowie deren Mischungen.

6. Zusammensetzung nach einem der Ansprüche 1 bis 5, **dadurch gekennzeichnet, daß** das kristalline Polyamid PA 12 und/oder PA 11 ist.

7. Zusammensetzung nach einem der Ansprüche 1 bis 6, **dadurch gekennzeichnet, daß** das kristalline Polyamid ein Molekulargewicht zwischen etwa 10.000 und 30.000, vorzugsweise zwischen 15.000 und 25.000, aufweist.

8. Zusammensetzung nach einem der Ansprüche 1 bis 7, **dadurch gekennzeichnet, daß** in dem ersten Polyamid die aliphatischen Einheiten in einer Menge von mindestens 10 Gew.-% vorhanden sind.

9. Zusammensetzung nach einem der Ansprüche 1 bis 8, **dadurch gekennzeichnet, daß** in dem ersten Polyamid die aliphatischen Einheiten die Einheiten 12 und/oder 11 sind.

10. Zusammensetzung nach einem der Ansprüche 1 bis 9, **dadurch gekennzeichnet, daß** das cycloaliphatische Diamin die Formel aufweist: 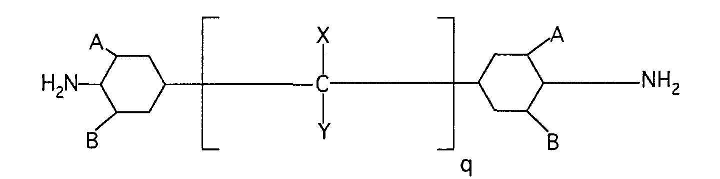 in der:
• A und B, identisch oder verschieden, ein Wasserstoffatom oder einen Methylrest darstellen;
• X und Y, identisch oder verschieden, ein Wasserstoffatom oder einen Methylrest darstellen; und
• q eine ganze Zahl zwischen 1 und 3 ist;
wobei es gegebenenfalls bis zu 50 Mol-% durch Isophorondiamin ersetzt sein kann.

11. Zusammensetzung nach Anspruch 10, **dadurch gekennzeichnet, daß** das cycloaliphatische Diamin Bis-(3-Methyl-4-aminocyclohexyl)methan ist, das gegebenenfalls bis zu 50 Mol-% durch Isophorondiamin ersetzt ist.

12. Zusammensetzung nach einem der Ansprüche 1 bis 11, **dadurch gekennzeichnet, daß** das erste Polyamid L12/TA/IA/BMACM in den jeweiligen molaren Mengen 2-0,5/0,7-0,5/0,3-0,5/0,95-1,05 entspricht.

13. Zusammensetzung nach einem der Ansprüche 1 bis 12, **dadurch gekennzeichnet, daß** das erste Polyamid ein Molekulargewicht von etwa 8.000 bis 25.000, vorzugsweise von etwa 10.000 bis 20.000, aufweist.

14. Zusammensetzung nach einem der Ansprüche 1 bis 13, **dadurch gekennzeichnet, daß** sie außerdem einen Füllstoff oder ein Additiv umfaßt.

15. Gegenstände, erhalten ausgehend von einer Zusammensetzung nach einem der Ansprüche 1 bis 14.

16. Verfahren zur Herstellung einer transparenten Polyamidzusammensetzung mit hoher Beständigkeit gegenüber chemischen Reagenzien, enthaltend, bezogen auf das Gewicht:
a) 1 bis 99 %, vorzugsweise 5 bis 95 %, eines ersten Polyamids, **gekennzeichnet durch** die folgenden Ketten: 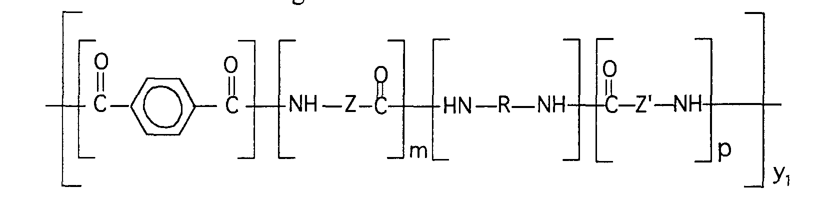 und 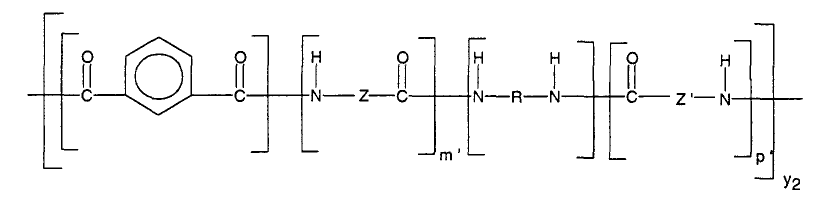 wobei:
• y₁ und y₂ Zahlen sind, deren Summe y₁ + y₂ zwischen 10 und 200 liegt und y₁/(y₁+y₂) > 0,5;
• m, p, m', p' Zahlen größer 0 sind;
• Z und Z' in den aliphatischen Einheiten -NH-Z-CO- und - NH-Z'-CO-, identisch oder verschieden, entweder ein Polymethylensegment (-CH₂-)ₙ sind, wobei n eine ganze Zahl größer oder gleich 6, vorzugsweise zwischen 7 und 11, ist, oder einen Block darstellen, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, und einem oder mehreren aliphatischen Carbonsäuren, die mindestens 4 Kohlenstoffatome, vorzugsweise 6 Kohlenstoffatome, zwischen den Säurefunktionen enthalten, resultiert;
• -HN-R-NH- ein cycloaliphatisches Amin darstellt;
wobei die aromatische Disäure in Mengen von höchstens 30 Mol-% **durch** eine aliphatische Dicarbonsäure ersetzt werden kann, die mehr als 4 Kohlenstoffatome, vorzugsweise mehr als 6 Kohlenstoffatome, zwischen den Säurefunktionen enthält; und
b) 99 bis 1 %, vorzugsweise 95 bis 5 %, eines semikristallinen Polyamids, das mindestens 35 Gew.-%, vorzugsweise 50 Gew.-%, einer aliphatischen Einheit enthält, die **durch** den Block - NH-(CH₂)_{n'}-CO- definiert ist, wobei n' eine ganze Zahl größer oder gleich 6, vorzugsweise zwischen 7 und 11, ist, gegebenenfalls als Teil einer semiaromatischen Einheit, und/oder einer aliphatischen Einheit, die **durch** den Block definiert ist, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, und einer oder mehrerer aliphatischer Dicarbonsäuren stammt, die mindestens 4 Kohlenstoffatome, vorzugsweise 6 Kohlenstoffatome, zwischen den Säurefunktionen enthalten,
**dadurch** gekennzeichnet, daß es einen Verfahrensschritt umfaßt, bei dem das erste Polyamid und das semikristalline Polyamid bei einer Temperatur oberhalb von 300 °C, vorzugsweise zwischen 300 °C und 400 °C, gemischt werden.

17. Verfahren nach Anspruch 16, **dadurch gekennzeichnet, daß** die Temperatur des Mischungsschrittes zwischen 300 °C und 370 °C liegt.

18. Verfahren nach Anspruch 16 oder 17, **dadurch gekennzeichnet, daß** die Verweilzeit zwischen 1 Sekunde und 20 Minuten liegt, vorzugsweise zwischen 10 Sekunden und 5 Minuten.

19. Verfahren zur Herstellung einer transparenten Polyamidzusammensetzung mit hoher Beständigkeit gegenüber Chemikalien, enthaltend, bezogen auf das Gewicht:
a) 1 bis 99 %, vorzugsweise 5 bis 95 %, eines ersten Polyamids, **gekennzeichnet durch** die folgenden Ketten: 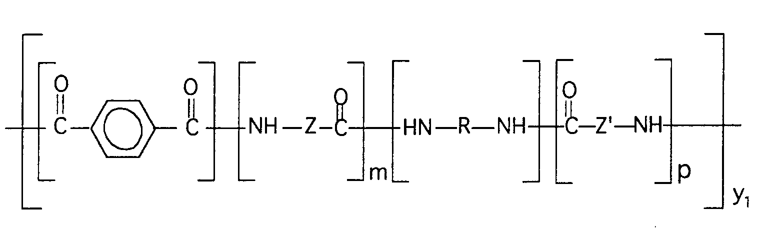 und 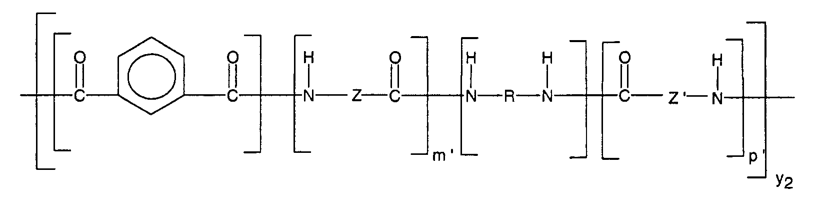 wobei:
• y₁ und y₂ Zahlen sind, deren Summe y₁ + y₂ zwischen 10 und 200 liegt;
• m, p, m', p' Zahlen größer 0 sind;
• Z und Z' in den aliphatischen Einheiten -NH-Z-CO- und - NH-Z'-CO-, identisch oder verschieden, entweder ein Polymethylensegment (-CH₂-)ₙ sind, wobei n eine ganze Zahl größer oder gleich 6, vorzugsweise zwischen 7 und 11, ist, oder einen Block darstellen, der eine Amidfünktion enthält, die aus der in etwa stöchiometrischen Kondensation eines oder mehrerer aliphatischer Diamine, die mindestens 4 Kohlenstoffatome zwischen den Aminfunktionen enthalten, und einem oder mehreren aliphatischen Carbonsäuren, die mindestens 4 Kohlenstoffatome, vorzugsweise 6 Kohlenstoffatome, zwischen den Säurefunktionen enthalten, resultiert;
• -HN-R-NH- ein cycloaliphatisches Amin darstellt;
wobei die aromatische Disäure in Mengen von höchstens 30 Mo1-% **durch** eine aliphatische Dicarbonsäure ersetzt werden kann, die mehr als 4 Kohlenstoffatome, vorzugsweise mehr als 6 Kohlenstoffatome, zwischen den Säurefunktionen enthält; und
b) 99 bis 1 %, vorzugsweise 95 bis 5 %, eines semikristallinen Polyamids, das mindestens 35 Gew.-%, vorzugsweise 50 Gew.-%, einer aliphatischen Einheit enthält, die **durch** den Block - NH-(CH₂)_{n'}-CO- definiert ist, wobei n' eine ganze Zahl größer oder gleich 6, vorzugsweise zwischen 7 und 11, ist, gegebenenfalls als Teil einer semiaromatischen Einheit, und/oder einer aliphatischen Einheit, die **durch** den Block definiert ist, der eine Amidfunktion enthält, die aus der in etwa stöchiometrischen Kondensation eines oder mehrerer aliphatischer Diamine, die mindestens 4 Kohlenstoffatome zwischen den Aminfunktionen enthalten, und einer oder mehrerer aliphatischer Dicarbonsäuren stammt, die mindestens 4 Kohlenstoffatome, vorzugsweise 6 Kohlenstoffatome, zwischen den Säurefunktionen enthalten,
**dadurch** gekennzeichnet, daß das Verfahren einen Verfahrensschritt umfaßt, bei dem das erste Polyamid, gegebenenfalls im Zustand des Prepolymers mit einem Polymerisationsgrad von mindestens 50 %, und das semikristalline Polymer bei einer Temperatur zwischen 250 °C und 350 °C in Gegenwart eines Amidifizierungs- oder Transamidifizierungskatalysators vermischt werden.

20. Verfahren nach Anspruch 19, **dadurch gekennzeichnet, daß** der Katalysator Phosphorsäure oder hypophosphorige Säure ist.

21. Verfahren nach Anspruch 19 oder 20, **dadurch gekennzeichnet, daß** die Temperatur zwischen 280 °C und 340 °C liegt.

22. Verfahren nach einem der Ansprüche 19 bis 21, **dadurch gekennzeichnet, daß** die Verweildauer 1 bis 60 Minuten beträgt, vorzugsweise 5 bis 30 Minuten.

23. Verfahren nach einem der Ansprüche 19 bis 22, **dadurch gekennzeichnet, daß** der Polymerisationsgrad des Prepolymers des ersten Polymers mindestens 90 % beträgt.

24. Verfahren nach einem der Ansprüche 16 bis 23, **dadurch gekennzeichnet, daß** der Mischungsschritt in einem Extruder durchgeführt wird.

## Claims

1. Transparent polyamide composition having a high resistance to chemical agents, comprising, by weight:
a) 1 to 99%, preferably 5 to 95%, of a first polyamide **characterized by** the chains: 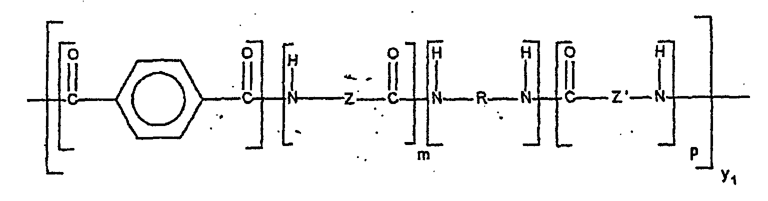 and 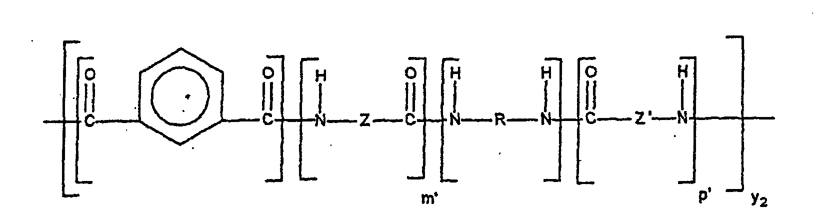 in which:
y₁ and y₂ are numbers such that their sum
y₁ + y₂ is between 10 and 200 and that
y₁/(y₁+y₂) > 0.5;
m, p, m', p' are numbers greater than 0;
Z and Z', in the aliphatic units -NH-Z-CO- and -NH-Z'-CO-, which may be identical or different, are either a polymethylene segment (̵CH₂)̵ₙ where n is an integer equal to or greater than 6 and preferably between 7 and 11, or a sequence containing an amide group resulting from the substantially stoichiometric condensation reaction of one or more aliphatic diamine(s) containing at least 4 carbon atoms between the amine groups and one or more aliphatic carboxylic diacid(s) containing at least 4, and preferably at least 6, carbon atoms between the acid groups; and
-HN-R-NH- is a cycloaliphatic diamine;
it being possible for up to 30 mol% of the aromatic diacid to be replaced by an aliphatic carboxylic diacid containing more than 4, preferably 6, carbon atoms between the acid groups; and
b) 99 to 1%, preferably 95 to 5%, of a semi-crystalline polyamide comprising at least 35%, preferably 50%, by weight of an aliphatic unit defined by the sequence -NH-(CH₂)_{n'}-CO- where n' is an integer equal to or greater than 6 and preferably between 7 and 11, optionally as part of a semi-aromatic unit, and/or an aliphatic unit defined by the sequence containing an amide group resulting from the substantially stoichiometric condensation reaction of one or more aliphatic diamine(s) containing at least 4 carbon atoms between the amine groups and one or more aliphatic carboxylic diacid(s) containing at least 4, and preferably at least 6, carbon atoms between the acid groups, capable of being obtained according to a process comprising a step of mixing the said first polyamide and semi-crystalline polyamide at a temperature greater than 300°C, preferably between 300° and 400°C.

2. Composition according to Claim 1, **characterized in that** the said composition comprises, by weight:
a) 40 to 90% of the said first polyamide; and
b) 60 to 10% of the said semi-crystalline polyamide.

3. Composition according to Claim 1, **characterized in that** the said composition comprises, by weight:
a) 50 to 80% of the said first polyamide; and
b) 50 to 20% of the said semi-crystalline polyamide.

4. Composition according to any one of Claims 1 to 3, **characterized in that** the said semi-crystalline polyamide contains at least 80% by weight of an aliphatic unit defined by the sequence -NH-(CH₂)_{n'}-CO- where n' is 7, 10 or 11, and/or an aliphatic unit defined by the sequence containing an amide group resulting from the substantially stoichiometric condensation reaction of one or more aliphatic diamine(s) containing at least 6 carbon atoms between the amine groups and one or more aliphatic carboxylic diacid(s) containing at least 7 carbon atoms between the acid groups.

5. Composition according to any one of Claims 1 to 4, **characterized in that** the said semi-crystalline polyamide is chosen from the group comprising: PA 12, PA 11, the corresponding copolymers in which the said units 12 or 11 represent more than 80% by weight, and mixtures thereof.

6. Composition according to any one of Claims 1 to 5, **characterized in that** the said crystalline polyamide is PA 12 and/or PA 11.

7. Composition according to any one of Claims 1 to 6, **characterized in that** the said semi-crystalline polyamide has a molecular weight of between about 10,000 and 30,000, preferably 15,000 to 25,000.

8. Composition according to any one of Claims 1 to 7, **characterized in that**, in the said first polyamide, the aliphatic units are present in a proportion of at least 10% by weight.

9. Composition according to any one of Claims 1 to 8, **characterized in that**, in the said first polyamide, the aliphatic units are 12 and/or 11 units.

10. Composition according to any one of Claims 1 to 9, **characterized in that** the said cycloaliphatic diamine has the formula: 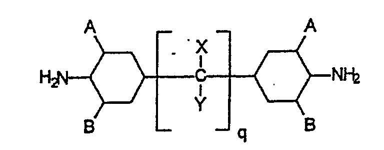 in which:
A and B, which may be identical or different, represent a hydrogen atom or a methyl radical;
X and Y, which may be identical or different, represent a hydrogen atom or a methyl radical;
q is an integer between 1 and 3;
up to 50 mol% of which may optionally be replaced by isophoronediamine.

11. Composition according to Claim 10, **characterized in that** the cycloaliphatic diamine is bis-(3-methyl-4-aminocyclohexyl)methane, up to 50 mol% of which is optionally replaced by isophoronediamine.

12. Composition according to any one of Claims 1 to 11, **characterized in that** the said first polyamide corresponds to L12/TA/IA/BMACM in the molar proportions: 2-0.5/0.7-0.5/0.3-0.5/0.95-1.05.

13. Composition according to any one of Claims 1 to 12, **characterized in that** the said first polyamide has a molecular weight of between about 8,000 and 25,000, preferably 10,000 to 20,000.

14. Composition according to any one of Claims 1 to 13, **characterized in that** it also contains a filler and/or an additive.

15. Articles obtained from a composition according to any one of Claims 1 to 14.

16. Process for the preparation of a transparent polyamide composition having a high resistance to chemical agents, comprising, by weight:
a) 1 to 99%, preferably 5 to 95%, of a first polyamide **characterized by** the chains: 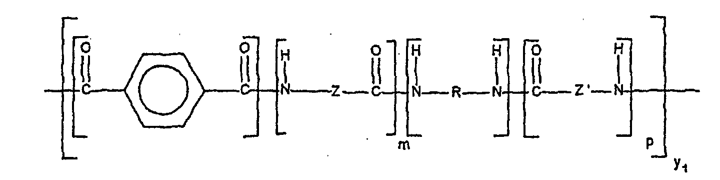 and 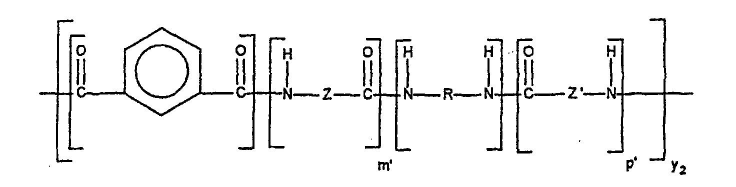 in which:
y₁ and y₂ are numbers such that their sum y₁ + y₂ is between 10 and 200 and that y₁/(y₁+y₂) > 0.5;
m, p, m', p' are numbers greater than 0;
Z and Z', in the aliphatic units -NH-Z-CO- and -NH-Z'-CO-, which may be identical or different, are either a polymethylene segment (̵CH₂)̵ₙ where n is an integer equal to or greater than 6 and preferably between 7 and 11, or a sequence containing an amide group resulting from the substantially stoichiometric condensation reaction of one or more aliphatic diamine(s) containing at least 4 carbon atoms between the amine groups and one or more aliphatic carboxylic diacid(s) containing at least 4, and preferably at least 6, carbon atoms between the acid groups; and
-HN-R-NH- is a cycloaliphatic diamine;
it being possible for up to 30 mol% of the aromatic diacid to be replaced by an aliphatic carboxylic diacid containing more than 4, preferably 6, carbon atoms between the acid groups; and
b) 99 to 1%, preferably 95 to 5%, of a semi-crystalline polyamide comprising at least 35%, preferably 50%, by weight of an aliphatic unit defined by the sequence -NH-(CH₂)_{n'}-CO- where n' is an integer equal to or greater than 6 and preferably between 7 and 11, optionally as part of a semi-aromatic unit, and/or an aliphatic unit defined by the sequence containing an amide group resulting from the substantially stoichiometric condensation reaction of one or more aliphatic diamine(s) containing at least 4 carbon atoms between the amine groups and one or more aliphatic carboxylic diacid(s) containing at least 4, and preferably at least 6, carbon atoms between the acid groups;
**characterized in that** it comprises a step for mixing the said first polyamide and semi-crystalline polyamide at a temperature greater than 300°C, preferably between 300 and 400°C.

17. Process according to Claim 16, **characterized in that** the temperature of the said mixing step is between 300 and 370°C.

18. Process according to Claim 16 or 17, **characterized in that** the residence time is between 1 second and 20 minutes, preferably 10 seconds and 5 minutes.

19. Process for the preparation of a transparent polyamide composition having a high resistance to chemical agents, comprising, by weight:
a) 1 to 99%, preferably 5 to 95%, of a first polyamide **characterized by** the chains: 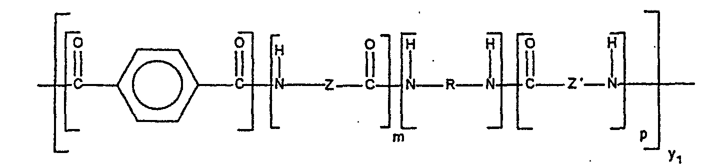 and 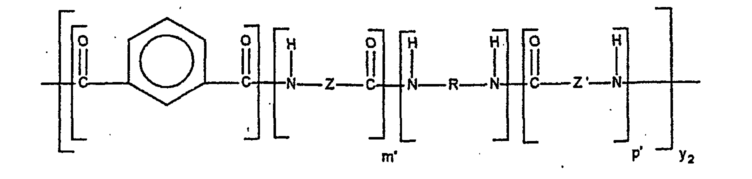 in which:
y₁ and y₂ are numbers such that their sum
y₁ + y₂ is between 10 and 200;
m, p, m', p' are numbers greater than 0;
Z and Z', in the aliphatic units -NH-Z-CO- and -NH-Z'-CO-, which may be identical or different, are either a polymethylene segment (̵CH₂)̵ₙ where n is an integer equal to or greater than 6 and preferably between 7 and 11, or a sequence containing an amide group resulting from the substantially stoichiometric condensation reaction of one or more aliphatic diamine(s) containing at least 4 carbon atoms between the amine groups and one or more aliphatic carboxylic diacid(s) containing at least 4, and preferably at least 6, carbon atoms between the acid groups; and
-HN-R-NH- is a cycloaliphatic diamine;
it being possible for up to 30 mol% of the aromatic diacid to be replaced by an aliphatic carboxylic diacid containing more than 4, preferably 6, carbon atoms between the acid groups; and
b) 99 to 1%, preferably 95 to 5%, of a semi-crystalline polyamide comprising at least 35%, preferably 50%, by weight of an aliphatic unit defined by the sequence -NH-(CH₂)_{n'}-CO- where n' is an integer equal to or greater than 6 and preferably between 7 and 11, optionally as part of a semi-aromatic unit, and/or an aliphatic unit defined by the sequence containing an amide group resulting from the substantially stoichiometric condensation reaction of one or more aliphatic diamine(s) containing at least 4 carbon atoms between the amine groups and one or more aliphatic carboxylic diacid(s) containing at least 4, and preferably at least 6, carbon atoms between the acid groups;
**characterized in that** it comprises a step for mixing the said first polyamide, optionally in the form of a prepolymer having a degree of polymerization of at least 50%, and the said semi-crystalline polymer at a temperature of between 250 and 350°C in the presence of an amidation or trans-amidation catalyst.

20. Process according to Claim 19, **characterized in that** the said catalyst is phosphoric acid or hypophosphorous acid.

21. Process according to Claim 19 or 20, **characterized in that** the temperature is 280 to 340°C.

22. Process according to any one of Claims 19 to 21, **characterized in that** the residence time is 1 to 60 minutes, preferably 5 to 30 minutes.

23. Process according to any one of Claims 19 to 22, **characterized in that** the degree of polymerization of the said prepolymer of the first polymer is at least 90%.

24. Process according to any one of Claims 16 to 23, **characterized in that** the mixing step is carried out in an extruder.
